# EUROPÄISCHE PATENTANMELDUNG

(11) **EP 4 803 456 A1**
(43) Veröffentlichungstag der Anmeldung: **09.09.2026**
(21) Anmeldenummer: 25162270.0
(22) Anmeldetag: 07.03.2025
(51) Int. Cl.: B65G 47/86

(54) **STÜTZVORRICHTUNG UND ABFÜLLVORRICHTUNG**

(71) Anmelder: Tyrolon GmbH, 6395 Hochfilzen (AT)
(72) Erfinder: Krieg, Andreas, 67596 Dittelsheim-Heßloch (DE); Mayer, Peter, 6395 Hochfilzen (AT)
(74) Vertreter: Meissner Bolte Partnerschaft mbB

(57) **Zusammenfassung**

Die Erfindung betrifft eine Stützvorrichtung (10) zum radialen Stützen von Behältern (12), insbesondere von dosenähnlichen Behältern (12), mit variabel einstellbaren Führdurchmesser, aufweisend ein Adapterelement (14), wobei das Adapterelement (14) um eine erste Drehachse (D1) drehbar ist, mit zumindest einem ersten konkaven Ausschnitt (16), mit zumindest einem zweiten konkaven Ausschnitt (18), wobei sich der erste und der zweite konkave Ausschnitt (16, 18) unterscheiden, und ein Einstellelement (20) das mit dem Adapterelement (14) zum Einstellen des ersten oder des zweiten konkaven Ausschnitts (16, 18) so gekoppelt ist, dass durch Betätigen des Einstellelements (20) das Adapterelement (14) von dem zumindest einem ersten konkaven Ausschnitt (16) zu dem zumindest einen zweiten konkaven Ausschnitt (18) drehbar ist.

## Beschreibung

Die vorliegende Erfindung betrifft eine Stützvorrichtung zum radialen Stützen von Behältern, insbesondere von dosenähnlichen Behältern, sowie eine Abfüllvorrichtung zum Abfüllen und Transportieren von Behältern, insbesondere dosenähnlichen Behältern, mit einer oder mehreren Stützvorrichtungen.

Eine derartige Abfüllvorrichtung zum Abfüllen und Transportieren von insbesondere dosenähnlichen Behältern ist bereits aus dem Stand der Technik bekannt und wird bei der fließbandmäßigen Verarbeitung und Handhabung von Behältern eingesetzt. Die Abfüllvorrichtung weist in der Regel eine Trägerplatte als Basis auf, an der bzw. auf der eine oder mehrere starre Stützvorrichtungen über den Umfang verteilt angebracht sind.

Unter dem Begriff "Behälter" sind im Zusammenhang mit der vorliegenden Erfindung insbesondere, aber nicht ausschließlich, Behälter mit einem im wesentlichen kreisförmigen Querschnitt zu verstehen, z.B. Flaschen oder Dosen oder Gläser, die jeweils in üblicher Weise aus Glas, Metall oder Kunststoff bestehen können. Unter dem Begriff "im Wesentlichen kreisförmig" sind im Zusammenhang mit der vorliegenden Erfindung nicht ausschließlich im geometrischen Sinne rund geformte Behälter zu verstehen, sondern beispielsweise auch ovale, regelmäßig mehreckige usw., die dann insbesondere einen im Wesentlichen kreisförmigen, aber beispielsweise auch ovalen oder mehreckigen Querschnitt aufweisen.

Die Abfüllvorrichtung kann in einem Prozessablauf zum Reinigen und Befüllen von Behältern verwendet werden. Sie kann dabei als Set-up von bereits bekannten Transportvorrichtungen ergänzt werden. Die Transportvorrichtungen werden örtlich so positioniert und eingestellt, dass sie die Behälter von Förderbändern aufnehmen und zur nächsten Station, z.B. zu der Abfüllvorrichtung und von dort z.B. zu einer Verschließstation transportieren.

Problematisch bei dem Abfüllen von dünnwandigen Behältern, wie beispielsweise Dosen, ist die Stabilität der Position des jeweiligen Behälters während des Befüllens. Dabei ist beim Befüllen vor allem kritisch, ob der Behälter hin- und her wackelt, so dass dieser durch den Impuls der Flüssigkeit beim Einfüllvorgang verkanten kann, oder gar aus dem Griff der Greifeinrichtung gedrückt wird. Aus dem Stand der Technik sind dabei Führungsschienen bekannt, welche die Behälter stützen. Allerdings sind diese geometrischen Schwankungen aufgrund der Wärmeausdehnung des Materials beim Betrieb bzw. Abfüllen unterlegen und zum anderen müssen diese je nach Behälter umgerüstet werden, so dass es zu hohen Umrüstzeiten kommt.

Es ist daher die Aufgabe der vorliegenden Erfindung eine Stützeinheit zum Stützen und Führen von Behältern zur Verfügung zu stellen, welche sich schnell und einfach auf neue Formate umrüsten lässt. Ferner ist es eine Aufgabe der vorliegenden Erfindung, eine Abfüllvorrichtung mit einer Stützeinheit zur Verfügung zu stellen.

Diese Aufgabe wird erfindungsgemäß durch ein Stützeinheit mit den Merkmalen des Anspruchs 1 sowie mit einer Abfüllvorrichtung mit den Merkmalen des Anspruchs 8 gelöst.

Der erste Aspekt der Erfindung ist eine Stützvorrichtung zum radialen Stützen von Behältern. Dabei eignet sich die Stützvorrichtung besonders vorteilhaft für dosenähnlichen Behälter. Die Stützvorrichtung zeichnet sich durch einen variabel einstellbaren Führdurchmesser auf, welcher effizient an das zu befüllende und damit einhergehend zu stützende Behälterformat einstellbar ist. Hierfür weist die Stützvorrichtung ein Adapterelement und ein Einstellelement auf. Das Adapterelement ist um eine erste Drehachse drehbar und weist zumindest einen ersten konkaven Ausschnitt und zumindest einen zweiten konkaven Ausschnitt auf, wobei sich der erste und der zweite konkave Ausschnitt unterscheiden. Dabei kann die Grundform des Adapterelementes kreisförmig sein. Ferner stellt der zumindest eine erste konkave Ausschnitt einen ersten Führungsdurchmesser und der zumindest eine zweite Ausschnitt einen zweiten Führungsdurchmesser zur Verfügung. Das Einstellelement ist mit dem Adapterelement zum Einstellen des ersten oder des zweiten konkaven Ausschnitts so gekoppelt, dass durch Betätigen des Einstellelements das Adapterelement von dem zumindest einem ersten konkaven Abschnitt zu dem zumindest einen zweiten konkaven Abschnitt drehbar ist.

Durch dieses einfache Umstellen der konkaven Abschnitte des Adapterelements über eine Drehung um die Drehachse, ist die Stützvorrichtung schnell auf ein neues Behälterformat umstellbar. Dies vereinfacht nicht nur das Umrüsten bei einer Formatänderung, sondern reduziert die Umrüstzeiten zu dem erheblich.

Dabei ist denkbar, dass ein Adapterelement mehr als zwei konkave Ausschnitte, beispielsweise vier konkave Ausschnitte, aufweist, welche sich alle voneinander unterschieden.

Das Einstellelement der Stützvorrichtung kann mechanisch, also mittels eines direkt oder indirekt gekoppelten Antriebs, betätigbar sein. Dies erlaubt eine besonders genau Ausrichtung des jeweiligen konkaven Abschnitts des Adapterelements. Alternativ kann das Einstellelement der Stützvorrichtung auch manuell betätigbar sein. Dies erlaubt eine händische Verstellung der konkaven Abschnitte, so dass eine platzsparende Bauweise möglich ist.

Eine besonders einfache Umstellung des Adapterelements bzw. eine einfache und leichtumsetzbare Betätigung des Einstellelements, ergibt sich, wenn das Einstellelement um eine zweite Drehachse drehbar ist, wobei die zweite Drehachse parallel zur ersten Drehachse angeordnet ist.

Des Weiteren ist es bei der Stützvorrichtung vorteilhaft, wenn das Adapterelement und das Einstellelement lösbar miteinander gekoppelt sind. Dies ermöglicht ein Austauschen sowohl des Einstellelements als auch des Adapterelements, sodass die Instandhaltung vereinfacht wird. Dabei ist es besonders vorteilhaft, wenn die lösbare Kopplung bzw. Verbindung formschlüssig ist. Dies kann beispielsweise mittels eines Rastmechanismus oder einer Nut-Feder-Verbindung umgesetzt werden. Diese sorgt zusätzlich für eine verbesserte und vereinfachte Instandhaltung eine besonders gute Kraftübertragung für die Einstellung des jeweiligen konkaven Ausschnitts des Adapterelements mittels des Einstellelements.

Für eine Umstellung von einem Ausschnitt zu dem anderen Ausschnitt des Adapterelements wird besonders wenig Platz als auch Kraft benötigt, wenn die erste Drehachse und die zweite Drehachse deckungsgleich sind.

Für eine automatische bzw. mechanische Betätigung des Einstellelements kann es vorteilhaft sein, wenn bei der Stützvorrichtung ein drehbares Übersetzungselement vorgesehen ist, welches mit dem Einstellelement in Wirkeingriff steht, so dass das Einstellelement über das Übersetzungselement betätigbar ist.

Dabei kann die Übertragung der Kraft bei der Betätigung des Einstellelements effizient gestaltet werden, wenn das Einstellelement und das Übersetzungselement ineinandergreifende Verzahnungen aufweisen.

Besonders vorteilhaft ist es, wenn das Übersetzungselement bzw. dessen Verzahnung so ausgelegt ist, dass eine Positionsänderung des Adapterelementes von dem ersten konkaven Ausschnitt zu dem zweiten konkaven Ausschnitt im in einer Abfüllanlage eingebauten Zustand dem Abstand zwischen zwei Greifvorrichtungen der Abfüllvorrichtung entspricht.

Ein zweiter Aspekt der Erfindung ist eine Abfüllvorrichtung zum Abfüllen und Transportieren von Behältern, insbesondere von dosenähnlichen Behältern. Die Abfülleinrichtung eine ringförmige Trägerplatte auf. Dabei ist die Trägerplatte derart ausgebildet, dass ein Positionieren und Befestigen der einen oder mehreren Greifvorrichtungen auf der Trägerplatte möglich ist/sind. Um einen die Behälter während des Befüllens ausreichend zu Stützen und ein Kippen oder Verkanten zu verhindern, sind eine oder mehrere Stützvorrichtungen gemäß dem ersten Aspekt der Erfindung vorgesehen. Besonders vorteilhaft ist es dabei, wenn zusätzlich eine oder mehrere Greifvorrichtungen zum Greifen, Halten und Führen von Behältern vorgesehen sind, wobei eine Greifvorrichtung jeweils einer Stützvorrichtung zugeordnet ist.

Diese Abfüllvorrichtung lässt sich aufgrund der verschiedenen konkaven Ausschnitte des Adapterelements der Stützvorrichtung einfach und schnell auf verschiedene Formate umrüsten.

Des Weiteren kann es bei der Abfüllvorrichtung vorteilhaft sein, wenn eine ringförmige Stützplatte parallel zu der Trägerplatte vorgesehen ist. Dabei ist die Stützplatte mit dem Einstellelement der Stützvorrichtung gekoppelt, wodurch das Einstellelement entweder betätigt werden kann, sobald die Abfüllvorrichtung ein Format des zu befüllenden Behälters umstellt, oder verhindert werden kann, dass das Einstellelement unbefugt betätigt werden kann.

Dabei kann es durch eine Bewegung der Stützplatte zu einer Betätigung des Einstellelements kommen, wodurch der stützende konkave Ausschnitt des Adapterelements geändert wird.

Des Weiteren kann es bei der Abfüllvorrichtung von Vorteil sein, wenn die Stützplatte mit dem Übersetzungselement wirkverbunden ist. Dabei ist die Wirkverbindung so ausgelegt, dass ein Drehen der Stützplatte um eine Drehachse, das Einstellelement so betätigt, dass es den Ausschnitt des Adapterelements und die Position des Adapterelementes in Bezug auf die Stützplatte ändert. Darunter ist zu verstehen, dass das Drehen der Stützplatte im Endeffekt zu einer Drehung des Adapterelementes um eine Drehachse führt, so dass das Adapterelement von einem konkaven Ausschnitt zum nächsten konkaven Ausschnitt gedreht wird.

Für die Umstellung bzw. Einstellung des benötigten konkaven Ausschnitts des Adapterelements ist es besonders vorteilhaft, wenn die Stützplatte eine außenliegende Verzahnung aufweist, und die Verzahnung des Übersetzungselements in die außenliegende Verzahnung eingreift. Dies ermöglicht die Übertragung des Drehens der Stützplatte auf das Einstellelement, umso das Adapterelement einzustellen.

Dabei kann in vorteilhafterweise, das Übersetzungselement, und dabei insbesondere dessen Verzahnung, so ausgelegt sein, dass eine Positionsänderung des Adapterelementes von dem ersten konkaven Ausschnitt zu dem zweiten konkaven Ausschnitt dem Abstand zwischen zwei Greifvorrichtungen der Abfüllvorrichtung entspricht.

Für die Änderung des konkaven Ausschnitts wird die Stützplatte der Abfüllvorrichtung verstellt. Dabei führt die Stützvorrichtung eine Bewegung entlang des Umfangs der Stützplatte durch. Der dabei zurück gelegte Weg entspricht dem Abstand zwischen zwei Greifvorrichtungen. Das Übersetzungselement stellt dabei sicher, dass die Stützvorrichtung während das Adapterelement rotiert wird den Abstand zwischen den Greifvorrichtungen zurücklegt, so dass der konkave Ausschnitt immer so positioniert ist, dass der Behälter an der vorher festgelegten Position gestützt wird. Das Übersetzungsverhältnis ist abhängig von der Anzahl der konkaven Ausschnitte des Adapterelements und den Abstand der Greifeinrichtungen. Dabei muss das Zahnverhältnis des Übersetzungselementes so ausgelegt werde, dass folgende Gleichung erfüllt ist:$Abstand der Greifvorrichtungen \left({in}^{∘}\right) = {360}^{∘} / Anzahl kokaver Ausschnitte .$

Des Weiteren kann es bei der Abfüllvorrichtung von Vorteil sein, wenn die Stützplatte zum Betätigen des Einstellelements von der Trägerplatte entkoppelbar ist, um die Stützplatte manuell oder motorisch anzutreiben.

Dies ermöglicht eine Verstellung der Stützvorrichtung mittels der Stützplatte, ohne dass die Trägerplatte rotiert werden muss. Demnach kann ein kleiner Antrieb mit weniger Leistung verwendet werden, oder nach der Entkopplung kann die Verstellung einfach händisch durchgeführt werden.

Weitere Ausführungsformen ergeben sich aus den Unteransprüchen.

Nachfolgend wird die Erfindung anhand eines Ausführungsbeispiels beschrieben, das anhand der Abbildungen näher erläutert wird. Hierbei zeigen:
- Figur 1: eine schematische Darstellung einer Stützvorrichtung in einem ersten Ausführungsbeispiel;
- Figur 2: eine schematische Darstellung einer Stützvorrichtung in einem zweiten Ausführungsbeispiel;
- Figur 3: eine schematische Darstellung eines Ausschnitts einer Abfüllvorrichtung mit einer Stützvorrichtung;
- Figur 4: schematische Darstellung eines Ausschnitts einer Abfüllvorrichtung mit mehreren Stützvorrichtungen.

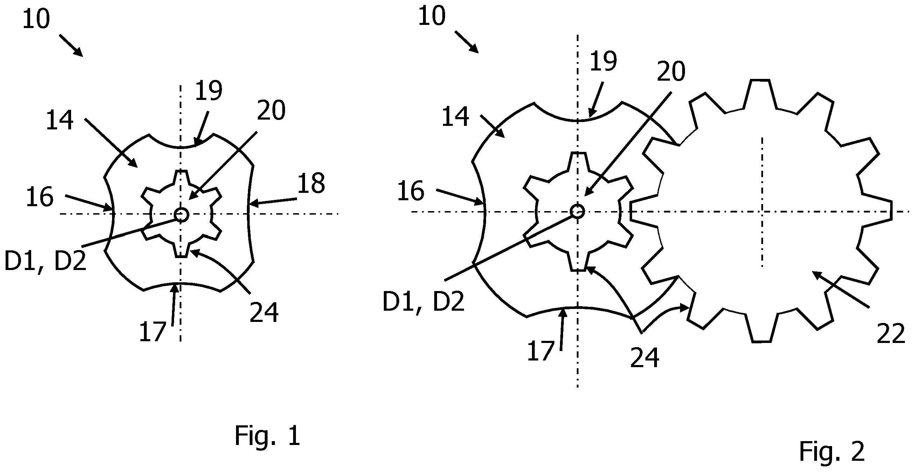

In den Fig. 1 und 2 sind jeweils eine Stützvorrichtung 10 zum radialen Stützen von Behältern 12, insbesondere von dosenähnlichen Behältern 12, mit variabel einstellbaren Führdurchmesser dargestellt. Diese Stützeinrichtung 10 eignet sich vor allem für das Stützen derartiger Behälter 12 während des Befüllvorgangs in einer Abfüllvorrichtung 30. Die Stützeinrichtungen der Fig. 1 und 2, weisen jeweils ein Adapterelement 14 und ein Einstellelement 20 auf. Dabei ist das Adapterelement 14 um eine erste Drehachse D1 drehbar. Um unterschiedliche Behälter 12 stützen zu können, weist die Stützvorrichtung 10 zumindest einen ersten konkaven Ausschnitt 16 und zumindest einen zweiten konkaven Ausschnitt 18 und in den vorliegenden Ausführungsbeispielen einen dritten und einen vierten konkaven Ausschnitt 17, 19 auf. Wie in den Fig. 1 und 2 zu erkennen ist, unterscheiden sich die vier konkaven Ausschnitte 16 bis 19 voneinander in ihrem jeweiligen Durchmesser. Das Einstellelement 20 dient dem Einstellen des jeweiligen konkaven Ausschnitts 16 bis 19. Hierfür ist das Einstellelement mit dem Adapterelement 14 gekoppelt, so dass durch Betätigen des Einstellelements 20 das Adapterelement 14 von dem zumindest einem ersten konkaven Ausschnitt 16 zu dem zumindest einen zweiten konkaven Ausschnitt 18 bzw. zu dem dritten und vierten Ausschnitt 17, 19 drehbar ist.

Die Betätigung des Einstellelement 20 der Fig. 1 ist dabei manuell betätigbar. Hierfür wird kein weiteres Element benötigt. Das Einstellelement 20 wird händisch um seine Drehachse D2 gedreht. Die zweite Drehachse ist dabei parallel und hier als Sonderfall sogar deckungsgleich zur ersten Drehachse angeordnet.

Für die Übertragung der Betätigung des Einstellelements 20 auf das Adapterelement 14 sind diese über eine formschlüssige Verbindung miteinander lösbar miteinander verbunden. Vorliegend handelt es sich dabei um eine nicht dargestellte Nut-Feder-Verbindung.

Im Gegensatz zur manuellen Betätigung ist das Einstellelement 20 des zweiten Ausführungsbeispiels der Fig. 2 ausgelegt, mechanische betätigt zu werden. Wofür ein drehbares Übersetzungselement 22 vorgesehen ist. Aufgrund der ineinandergreifenden Verzahnungen 24 des Einstellelements 20 und des Übersetzungselements 22 stehen diese in Wirkeingriff, so dass das Einstellelement 20 über das Übersetzungselement 22 betätigbar ist.

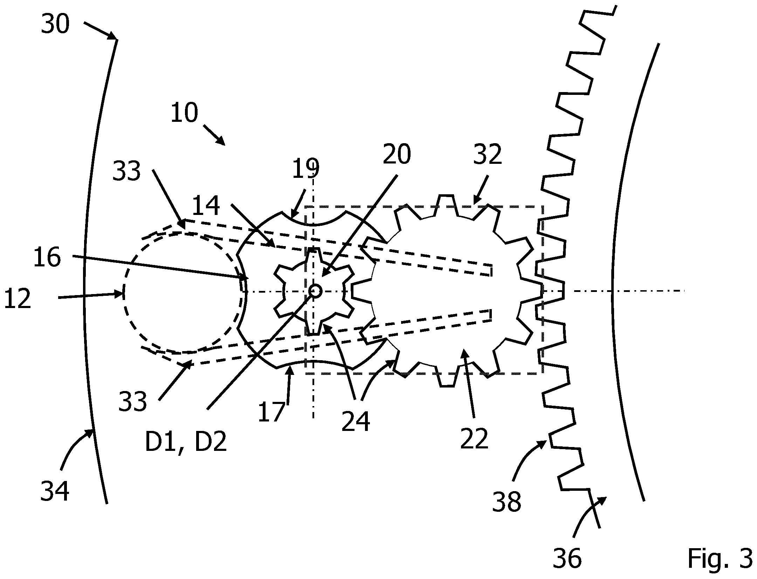

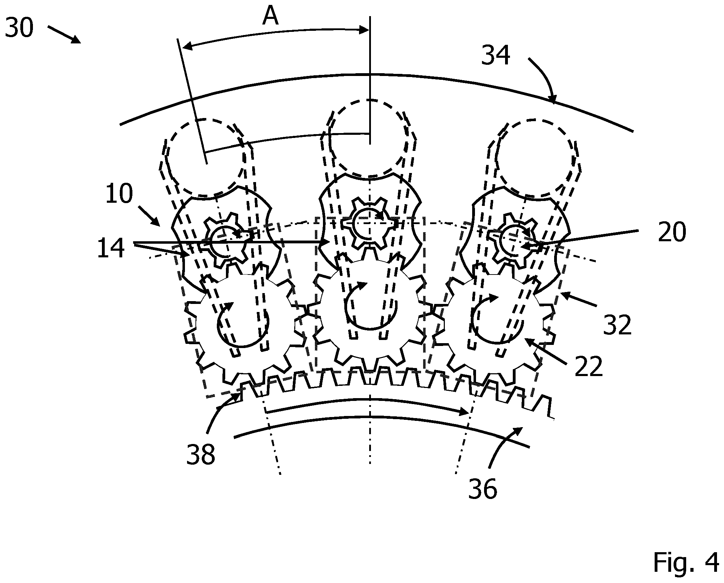

In den Fig. 3 und 4 ist jeweils ein Ausschnitt einer Abfüllvorrichtung 30 zum Abfüllen und Transportieren von Behältern 12, insbesondere von dosenähnlichen Behältern 12, dargestellt. Abfüllvorrichtungen weisen eine oder mehrere Greifvorrichtung 32 (strichliert dargestellt) zum Greifen, Halten und Führen von Behältern 12 und eine ringförmige Trägerplatte 34 auf. Dabei ist die Trägerplatte derart ausgebildet, dass ein Positionieren und Befestigen der einen oder mehreren Greifvorrichtungen 32 auf der Trägerplatte 34 möglich ist/sind. Zusätzlich sind eine oder mehrere Stützvorrichtungen 10 gemäß dem zweiten Ausführungsbeispiel der Fig. 2 vorgesehen. Dabei ist einer Greifvorrichtung 32 jeweils eine Stützvorrichtung 10 zugeordnet ist.

Da die Abfüllanlage 30 einen großen Durchmesser und dementsprechend viele Greifvorrichtungen 32 mit Stützvorrichtungen 10 aufweist, wird für eine bessere Übersicht ist in Fig. 3 lediglich eine Stützvorrichtung 10 mit einer ihr zugeordneten Greifvorrichtung 32 und deren Greifarmpaar 33 dargestellt. In Fig. 4 sind mehrere Greifeinrichtungen 32 und Stützvorrichtungen 10 dargestellt. Ferner sind ihre Bewegungsrichtungen während einer Umstellung von einem konkaven Ausschnitt zum nächsten konkaven Ausschnitt 16 bis 19 durch Pfeile angedeutet.

Zusätzlich ist hier eine ringförmige Stützplatte 36 parallel zu der Trägerplatte 34 vorgesehen. Die Stützplatte 36 ist mit dem Einstellelement 20 der Stützvorrichtung 10 mittels dem Übersetzungselement 22 wirkverbunden bzw. gekoppelt. In den vorliegenden Ausführungsbeispielen der Fig. 3 und 4 greift die Verzahnung 24 des Übersetzungselements 22 in die außenliegende Verzahnung 38 der Stützplatte 34, um so das Drehen der Stützplatte 36 um eine Drehachse auf das Einstellelement 20 zu übertragen. Durch die Betätigung des Einstellelements 32 und dessen Rotation um die zweite Drehachse bzw. die deckungsgleiche erst Drehachse D1, D2, ändert sich der Ausschnitt 16, 18 des Adapterelements 14 und die Position des Adapterelementes 14 in Bezug auf die Stützplatte 36 ändert.

Dabei ist das Übersetzungselement 22 so ausgelegt ist, dass eine Positionsänderung des Adapterelementes 14 von dem ersten konkaven Ausschnitt 16 zu dem zweiten konkaven Ausschnitt 18 dem Abstand A zwischen zwei Greifvorrichtungen 32 entspricht. Bei der Umstellung des Ausschnitts 16 bis 19 wird die Stützplatte um den Abstand zweier Greifeinrichtung um ihre Drehachse rotiert. Der Abstand A zwischen zwei Greifvorrichtungen 32 entspricht vorliegend einer Rotation des Adapterelements 12 um 45° um die erste Drehachse D1.

Für diese Bewegung der Stützplatte ist diese von der Trägerplatte 34 entkoppelbar, um die Stützplatte 36 manuell oder motorisch anzutreiben.

Während dieser Bewegung bleibt die Trägerplatte 34 inklusive der Greifeinrichtung 32 an ihrer vorhergehenden Position und werden somit nicht mit bewegt.

### Bezugszeichenliste

- 10: Stützvorrichtung
- 12: Behältern
- 14: Adapterelement
- 16: ersten konkaven Ausschnitt
- 17: dritten konkaven
- 18: zweiten konkaven Ausschnitt
- 19: vierten konkaven Ausschnitt
- 20: Einstellelement
- 22: Übersetzungselement
- 24: Verzahnungen
- 30: Abfüllvorrichtung
- 32: Greifvorrichtung
- 33: Greifarm
- 34: Trägerplatte
- 36: Stützplatte
- 38: Außenverzahnung

- A: Abstand
- D1: erste Drehachse
- D2: zweite Drehachse

## Patentansprüche

1. Stützvorrichtung (10) zum radialen Stützen von Behältern (12), insbesondere von dosenähnlichen Behältern (12), mit variabel einstellbaren Führdurchmesser, aufweisend
- ein Adapterelement (14), wobei das Adapterelement (14) um eine erste Drehachse (D1) drehbar ist,
∘ mit zumindest einem ersten konkaven Ausschnitt (16),
∘ mit zumindest einem zweiten konkaven Ausschnitt (18),
wobei sich der erste und der zweite konkave Ausschnitt (16, 18) unterscheiden, und
- ein Einstellelement (20) das mit dem Adapterelement (14) zum Einstellen des ersten oder des zweiten konkaven Ausschnitts (16, 18) so gekoppelt ist, dass durch Betätigen des Einstellelements (20) das Adapterelement (14) von dem zumindest einem ersten konkaven Ausschnitt (16) zu dem zumindest einen zweiten konkaven Ausschnitt (18) drehbar ist.

2. Stützvorrichtung (10) nach Anspruch 1,
**dadurch gekennzeichnet, dass**
das Einstellelement (20) mechanisch oder manuell betätigbar ist.

3. Stützvorrichtung (10) nach Anspruch 1 oder 2,
**dadurch gekennzeichnet, dass**
das Einstellelement (20) um eine zweite Drehachse (D2) drehbar ist, wobei die zweite Drehachse (D2) parallel zur ersten Drehachse (D1) angeordnet ist.

4. Stützvorrichtung (10) nach einem der vorhergehenden Ansprüche,
**dadurch gekennzeichnet, dass**
das Adapterelement (14) und das Einstellelement (20) lösbar, insbesondere über eine formschlüssige Verbindung, miteinander gekoppelt sind.

5. Stützvorrichtung (10) nach einem der vorhergehenden Ansprüche,
**dadurch gekennzeichnet, dass**
die erste Drehachse (D1) und die zweite Drehachse (D2) deckungsgleich sind.

6. Stützvorrichtung (10) nach einem der vorhergehenden Ansprüche,
**dadurch gekennzeichnet, dass**
ein drehbares Übersetzungselement (22) vorgesehen ist, welches mit dem Einstellelement (20) in Wirkeingriff steht, so dass das Einstellelement (20) über das Übersetzungselement (22) betätigbar ist.

7. Stützvorrichtung (10) nach einem der vorhergehenden Ansprüche,
**dadurch gekennzeichnet, dass**
das Einstellelement (20) und das Übersetzungselement (22) ineinandergreifende Verzahnungen (24) aufweisen.

8. Abfüllvorrichtung (30) zum Abfüllen und Transportieren von Behältern (12), insbesondere von dosenähnlichen Behältern (12), mit einer ringförmigen Trägerplatte (34), die derart ausgebildet ist, dass ein Positionieren und Befestigen der einen oder mehreren Greifvorrichtungen (32) auf der Trägerplatte (34) möglich ist/sind, und
eine oder mehrere Stützvorrichtungen (10) gemäß einem der vorhergehenden Ansprüche, und
optional einer oder mehrerer Greifvorrichtung (32) zum Greifen, Halten und Führen von Behältern (12) und wobei einer Greifvorrichtung (32) jeweils eine Stützvorrichtung (10) zugeordnet ist.

9. Abfüllvorrichtung (30) nach Anspruch 8,
**dadurch gekennzeichnet, dass**
eine ringförmige Stützplatte (36) parallel zu der Trägerplatte (34) vorgesehen ist, wobei die Stützplatte (36) mit dem Einstellelement (20) der Stützvorrichtung (10) gekoppelt ist.

10. Abfüllvorrichtung (30) nach Anspruch 8 oder 9,
**dadurch gekennzeichnet, dass**
die Stützplatte (36) mit dem Übersetzungselement (22) wirkverbunden ist, wobei die Wirkverbindung so ausgelegt, dass ein Drehen der Stützplatte (36) um eine Drehachse, das Einstellelement (20) so betätigt, dass es den Ausschnitt (16, 18) des Adapterelements (14) und die Position des Adapterelementes (14) in Bezug auf die Stützplatte (36) ändert.

11. Abfüllvorrichtung (30) nach Anspruch 10,
**dadurch gekennzeichnet, dass**
die Stützplatte (36) eine außenliegende Verzahnung (36) aufweist, und die Verzahnung (24) des Übersetzungselements (22) in die außenliegende Verzahnung (36) eingreift, um das Drehen der Stützplatte (36) auf das Einstellelement (20) zu übertragen.

12. Abfüllvorrichtung (30) nach Anspruch 10 oder 11,
**dadurch gekennzeichnet, dass**
das Übersetzungselement (22) so ausgelegt ist, dass eine Positionsänderung des Adapterelementes (14) von dem ersten konkaven Ausschnitt (16) zu dem zweiten konkaven Ausschnitt (18) dem Abstand zwischen zwei Greifvorrichtungen (32) entspricht.

13. Abfüllvorrichtung (30) nach einem der Ansprüche 6 bis 9,
**dadurch gekennzeichnet, dass**
die Stützplatte (36) zum Betätigen des Einstellelements (20) von der Trägerplatte (34) entkoppelbar ist, um die Stützplatte (36) manuell oder motorisch anzutreiben.
